# EUROPÄISCHE PATENTSCHRIFT

(11) **EP 3 891 208 B1**
(45) Veröffentlichungstag und Bekanntmachung des Hinweises auf die Patenterteilung: **05.04.2023**
(21) Anmeldenummer: 19812832.4
(22) Anmeldetag: 05.12.2019
(51) Int. Cl.: C08G 63/90

(54) **VERFAHREN ZUR HERSTELLUNG EINES (CO)POLYESTERS**
METHOD FOR PURIFYING A (CO)POLYESTER
PROCÉDÉ DE PURIFICATION D'UN (CO)POLYESTER

(30) Priorität: 06.12.2018 EP 18210704
(43) Veröffentlichungstag der Anmeldung: 13.10.2021
(73) Patentinhaber: BASF SE, 67056 Ludwigshafen am Rhein (DE)
(72) Erfinder: LOHMANN, Jerome, 67056 Ludwigshafen (DE); LEHENMEIER, Maximilian, 67056 Ludwigshafen (DE); EFFEN, Norbert, 67056 Ludwigshafen (DE); BUSSMANN, Martin, 67056 Ludwigshafen (DE); SCHICK, Michael Bernhard, 67056 Ludwigshafen (DE); WITT, Timo Benjamin, 67056 Ludwigshafen (DE)
(74) Vertreter: BASF IP Association
(86) Internationale Anmeldenummer: PCT/EP2019/083845
(87) Internationale Veröffentlichungsnummer: WO 2020/115221

(56) Entgegenhaltungen:
- WO-A1-2017/148931
- JP-A- 2003 212 984

## Beschreibung

Die vorliegende Erfindung betrifft ein Verfahren zur Herstellung eines (Co)Polyesters, wobei der (Co)Polyester zumindest teilweise aus 1,4-Butylenedicarboxylat-Einheiten besteht, in einer Entgasungsanlage, dadurch gekennzeichnet, dass der Roh-(Co)Polyester in Gegenwart von 0,1 bis 5 Gew.-%, bezogen auf das Gesamtgewicht der Einsatzstoffe, eines Schleppmittels, vorzugsweise kontinuierlich bei einer mittleren Verweilzeit von 0,1 bis 2 Minuten, und bei einem Druck zwischen 5 bis 300 mbar entgast wird.

Insbesondere betrifft die vorliegende Erfindung ein Verfahren zur Herstellung einer Polymermischung enthaltend einen oder mehrere (Co)Polyester, die zumindest zumindest teilweise aus 1,4-Butylenedicarboxylat-Einheiten aufgebaut sind, in einer Entgasungsanlage, die gleichzeitig als Mischungsaggregat fungiert, dadurch gekennzeichnet, dass der Roh-(Co)Polyester mit ggf. weiteren Polymeren und Hilfsstoffen in Gegenwart von 0,1 bis 5 Gew.-%, bezogen auf das Gesamtgewicht der Polymermischung, eines Schleppmittels - vorzugsweise Wasser - vorzugsweise kontinuierlich bei einer mittleren Verweilzeit von 0,1 bis 2 Minuten und einem Druck zwischen 0,1 bis 300 mbar - vorzugsweise 5 bis 100 mbar - gemischt und entgast wird.

Aus der Literatur sind Verfahren zur kontinuierlichen Herstellung von Polyestern wie Polybutylensuccinat (PBS), Polybutylensuccinat-coadipat (PBSA) oder Polybutylensuccinatcosebacat (PBSSe) bekannt (s. WO-A 2009/127556 und EP-A 2228399). In diesen Schriften wird die Abreicherung von gebildetem Tetrahydrofuran (THF) beschrieben. Die in diesen Schriften beschriebenen Verfahren führen jedoch nicht zu einer ausreichenden Abreicherung des THF um eine Zulassung für den Lebensmittelkontakt nach EU 10/2011 zu erhalten.

In der WO 2017/148931 wird ein Verfahren zur Abreicherung von THF in Polyermischungen enthaltend einen oder mehrere (Co)Polyester, die zumindest teilweise aus 1,4-Butylenedicarboxylat-Einheiten aufgebaut sind. Hierbei wird die gebildete Polymermischung mehrere Tage bei hohen Drücken und erhöhter Temperatur einem Luftstrom ausgesetzt. Hinsichtlich der Raum/Zeit Ausbeuten und der Energieeffizienz kann dieses Verfahren nicht voll überzeugen.

Ziel der vorliegenden Erfindung war es daher, ein effizientes und prozessfähiges Verfahren zur Herstellung von THF-armen (Co)Polyestern oder einer Polymermischung enthaltend einen oder mehrere (Co)Polyester, wobei der (Co)Polyester zumindest teilweise aus 1,4-Butylenedicarboxylat-Einheiten besteht, bereitzustellen, das die oben beschriebenen Nachteile nicht aufweist.

Überraschenderweise wurde ein Verfahren gefunden, wobei ein Roh-(Co)Polyester in Gegenwart von 0,1 bis 5 Gew.-%, bezogen auf das Gesamtgewicht des Roh-(Co)Polyesters, eines Schleppmittels in einer Entgasungsanlage bei einem Druck zwischen 5 bis 300 mbar entgast wird.

Dieses Verfahren ist wesentlich effizienter als ein entsprechendes Verfahren bei gleichem Druck, jedoch in Abwesenheit eines Schleppmittels wie vorzugsweise Wasser.

Eine interessante Variante ist das Verfahren zur Herstellung einer Polymermischung enthaltend einen oder mehrere (Co)Polyester, die zumindest zumindest teilweise aus 1,4-Butylenedicarboxylat-Einheiten aufgebaut sind, in einer Entgasungsanlage, die gleichzeitig als Mischungsaggregat fungiert, dadurch gekennzeichnet, dass der Roh-(Co)Polyester mit ggf. weiteren Polymeren und Hilfsstoffen in Gegenwart von 0,1 bis 5 Gew.-%, bezogen auf das Gesamtgewicht der Polymermischung, eines Schleppmittels - vorzugsweise Wasser - bei einem Druck zwischen 0,1 bis 300 mbar - vorzugsweise 5 bis 100 mbar - gemischt und entgast wird.

Die Erfindung wird im Folgenden näher beschrieben.

Unter (Co)Polyestern werden i) aliphatische Polyester und Copolyester, ii) aliphatischaromatische Copolyester sowie iii) aromatische Polyester, die jeweils zumindest teilweise aus 1,4-Butylenedicarboxylat-Einheiten aufgebaut sind, verstanden. Die gemäß DIN EN 13432 biologisch abbaubaren, aliphatischen und aliphatisch-aromatischen (Co)polyester sind besonders bevorzugt.

Unter aliphatischen (Co)Polyestern i) werden solche Polyester und Copolyester verstanden, die überwiegend aus den Monomeren aliphatische Dicarbonsäuren und 1,4-Butandiol aufgebaut sind.

Als aliphatische Dicarbonäuren oder deren esterbildende Derivate kommen im Allgemeinen solche mit 2 bis 40 Kohlenstoffatomen, vorzugsweise 4 bis 14 Kohlenstoffatomen, in Betracht. Sie können vorzugsweise linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol^{®} 1061 der Fa. BASF SE) 1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Din-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Bernsteinsäure oder Gemische von Bernsteinsäure mit vorzugsweise bis 25 mol% Adipinsäure oder vorzugsweise bis 10 mol% Sebazinsäure oder deren esterbildende Derivate, wie deren Alkylester eingesetzt.

Bernsteinsäure, Azelainsäure, Sebacinsäure und Brassylsäure haben zudem den Vorteil, dass sie als nachwachsende Rohstoffe zugänglich sind.

Im Allgemeinen wird als aliphatisches Diol 1,4-Butanediol eingesetzt.

### Bevorzugt sind aliphatische (Co)Polyester i die folgenden Komponenten enthalten:

i-a) 80 bis 100 mol %, bezogen auf die Komponenten i-a bis i-b, Bernsteinsäure;
i-b) 0 bis 20 mol %, bezogen auf die Komponenten i-a bis i-b, einer oder mehrerer Dicarbonsäuren ausgewählt aus: Adipinsäure, Azelainsäure, Sebazinsäure oder Brassylsäure;
i-c) 99 bis 100 mol %, bezogen auf die Komponenten i-a bis i-b, 1,4-Butandiol;
i-d) 0 bis 1 Gew.- %, bezogen auf die Komponenten i-a bis i-c eines Kettenverlängerers und/oder Verzweigers.

In der Regel enthalten die Polyester i-a bis i-d 0 bis 2 Gew-%, vorzugsweise 0,05 bis 1,0 Gew.-% und insbesondere bevorzugt 0,1 bis 0,3 Gew.-%, bezogen auf das Gesamtgewicht des Polyesters i, eines Verzweigers und/oder 0,1 bis 1,0 Gew.- %, bezogen auf das Gesamtgewicht des Polyesters i, eines Kettenverlängerers. Der Verzweiger ist bevorzugt mindestens ein trifunktioneller Alkohol oder eine mindestens trifunktionellen Carbonsäure. Als Kettenverlängerer kommen insbesondere difunktionelle Isocyanate, Isocyanurate, Oxazoline, Carbonsäureanhydrid oder Epoxide in Frage.

Besonders bevorzugte Verzweiger haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente lassen sich biologisch abbaubare Polyester mit einer strukturellen Viskosität aufbauen. Die biologisch abbaubaren Polyester lassen sich leichter verarbeiten.

Unter einem Diisocyanat als Kettenverlängerer werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylen-diisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Unter polyfunktionellen Epoxiden als Kettenverlängerer wird insbesondere ein Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist beispielsweise Joncryl^{®} ADR 4468.

In der Regel ist es sinnvoll die verzweigenden (mindestens trifunktionellen) Verbindungen zu einem früheren Zeitpunkt der Polymerisation zuzugeben.

Neben den Dicarbonsäuren und Diolen können die aliphatischen (Co)Polyester weitere der folgenden Komponenten ausgewählt aus der Gruppe bestehend aus: Dihydroxyverbindung und Hydoxycarbonsäure enthalten.

Zur Herstellung von Polyestern kann eine Hydroxycarbonsäure eingesetzt werden wie: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als Ingeo^{®} (Fa. NatureWorks) oder als Luminy^{®} (Fa. Total Corbion) erhältlich), besonders bevorzugt für die Herstellung von aliphatischen Polyestern sind die niedermolekularen und cyclischen Derivate davon.

Die Hydroxycarbonsäuren können beispielsweise in Mengen von 0,01 bis 50, bevorzugt von 0,1 bis 15 Gew.-% bezogen auf die Menge der Monomere verwendet werden.

Unter aliphatischen (Co)Polyester i werden insbesondere Polybutylensuccinat (PBS), Polybutylenadipat (PBA), Polybutylensuccinat-coadipat (PBSA), Polybutylensuccinatcosebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GS-Pla oder BioPBS vermarktet. Neuere Entwicklungen sind in der WO 2010/034711 beschrieben.

Die (Co)Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 40000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl gemäß ISO 1628-5 (gemessen in 0,05 g/ml Lösung Phenol/o-Dichlorbenzol (1:1)) liegt zwischen 30 und 450, vorzugsweise von 100 bis 400 mL/g (gemessen in o-Dichlorbenzol/Phenol (Gewichtsverhältnis 50/50). Der Schmelzpunkt liegt im Bereich von 85 bis 130, bevorzugt im Bereich von 95 bis 120° C.

Der MVR (Schmelzvolumenrate) nach EN ISO 1133 (190° C, 2,16 kg Gewicht) liegt im Allgemeinen vor Kettenverlängerung bei 0,1 bis 150, bevorzugt bei 2 bis 150 cm³/10 min.

Die Säurezahlen nach DIN EN 12634 liegen im Allgemeinen bei 0,01 bis 3 mg KOH/g, vorzugsweise bei 0,1 bis 1,0 mg KOH/g und insbesondere bevorzugt bei 0,1 bis 0,7 mg KOH/g.

Unter aliphatisch-aromatischen Co-Polyestern ii sind lineare, kettenverlängerte und gegebenenfalls verzweigte und kettenverlängerte Co-Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO2010/034689). Insbesondere sind unter Polyestern ii Produkte wie ecoflex^{®} (BASF SE) zu verstehen.

Zu den bevorzugten Co-Polyestern ii zählen Co-Polyester, die als wesentliche Komponenten enthalten:
ii-a) 30 bis 70 mol-%, vorzugsweise 40 bis 60 und insbesondere bevorzugt 50 bis 60 mol-%, bezogen auf die Komponenten ii-a) bis ii-b), einer aliphatischen Dicarbonsäure oder Mischungen davon, vorzugsweise wie im Folgenenden ausgeführt: Adipinsäure, Azelainsäure, Sebacinsäure und Brassylsäure,
ii-b) 30 bis 70 mol-%, vorzugsweise 40 bis 60 und insbesondere bevorzugt 40 bis 50 mol-%, bezogen auf die Komponenten ii-a) und ii-b), einer aromatischen Dicarbonsäure oder Mischungen davon, vorzugsweise wie im Folgenenden ausgeführt: Terephthalsäure oder 2,5-Furandicarbonsäure,
ii-c) 99 bis 100 mol-%, bezogen auf die Komponenten ii-a) bis ii-b), 1,4-Butandiol; und
ii-d) 0 bis 2 Gew.-%, vorzugsweise 0,1 bis 1 Gew.-%, bezogen auf die Komponenten ii-a) bis ii-c), eines Kettenverlängerers, insbesondere eines di- oder polyfunktionellen Isocyanats, vorzugsweise Hexamethylendiisocyanats und gegebenenfalls 0,01 bis 0,3 Gew.-% eines Verzweigers vorzugsweise: Trimethylolpropan, Pentaerythrit und insbesondere Glycerin.

Als aliphatische Disäuren ii-a können die zuvor unter den aliphatischen (Co)Polyestern i beschriebenen eingesetzt werden. Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Adipinsäure oder Sebacinsäure oder deren jeweilige esterbildenden Derivate oder Mischungen davon eingesetzt.

Die aromatischen Dicarbonsäuren oder deren esterbildende Derivate ii-b können einzeln oder als Gemisch aus zwei oder mehr davon eingesetzt werden. Besonders bevorzugt wird Terephthalsäure oder 2,5-Furandicarbonsäure oder deren esterbildende Derivate verwendet.

Als Diol ii-c wird 1,4-Butandiol eingesetzt, das auch als nachwachsender Rohstoff zugänglich ist. Es können auch Mischungen mit anderen Diolen verwendet werden.

In der Regel werden 0 bis 1 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,05 bis 1 Gew-%, vorzugsweise 0,1 bis 1,0 Gew.- %, bezogen auf das Gesamtgewicht des Co-Polyesters, eines Kettenverlängerers (ii-d) eingesetzt. Bevorzugt sind die gleichen Verzweiger und Kettenverlängerer (ii-d) wie die zuvor detailliert beschriebenen Verzweiger und Kettenverlängerer (i-d).

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140° C.

Der MVR (Schmelzvolumenrate) nach EN ISO 1133-1 DE (190° C, 2,16 kg Gewicht) liegt im Allgemeinen bei 1 bis 50, bevorzugt bei 1,5 bis 25 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als aromatische Polyester iii auf Basis von Terephthalsäure kommt insbesondere das im Markt erhältliche Polybutylenterephthalat (PBT) in Frage.

Ein aromatischer Polyester iii auf Basis von 2,5-Furandicarbonsäure ist beispielsweise: Polybutylen-2,5-furandicarboxylat (PBF), die wie in WO2013/062408, WO2010/077133, WO2007/052847 beschrieben, hergestellt werden können.

Die zuvor beschriebenen THF-armen (Co)Polyester können in Polymermischungen eingesetzt werden, die neben den (Co)Polyestern noch weitere Polymere, Hilfststoffe und Zusatzstoffe enthalten. Interessant ist dies insbesondere für Polyermischungen, die als Verpackungsmaterialien für Lebensmittel wie beispielsweise Kaffeekapseln, Lebensmittelfolien, Druckverschlussfolien, Catering-Besteck, Strohhalme, mit den Polymermischungen beschichtete Papierbecher oder geschäumte oder spritzgegossene Schalen für Wurst, Käse und/oder Fleisch oder als Spielzeug zum Einsatz gelangen.

In einer bevorzugten Ausführungsform des erfindungsgemäßen Verfahrens erfolgt die Abreicherung des THF im Compoundierschritt bei der Herstellung der Polymermischung. In dieser Verfahrensvariante können auch (Co)Polyester zum Einsatz gelangen, die zuvor nicht an THF abgereichert wurden.

Bevorzugte Polyestermischung enthalten:
i) 5 bis 95 Gew.-%, vorzugsweise 20 bis 80 Gew.-%, jeweils bezogen auf die Polyestermischung eines oder mehrere der zuvor beschriebenen aliphatischen und aliphatisch-aromatischen (Co)polyester,
ii) 95 bis 5 Gew.-%, vorzugsweise 80 bis 20 Gew.-%, jeweils bezogen auf die Polyestermischung mindestens einer oder mehrerer Komponenten ausgewählt aus der Gruppe bestehend aus: Polycaprolacton, Stärke, thermoplastifizierte Stärke, Zellulose, Polyhydroxyalkanoat, Polyglykolsäure und Polymilchsäure.
iii) 0 bis 40 Gew.-%, vorzugsweise 10 bis 30 Gew.-%, jeweils bezogen auf die Polyestermischung mindestens einer oder mehrerer Füllstoffen ausgewählt aus der Gruppe bestehend aus Talkum, Calcium Carbonate, Kaolin, Mineralfasern

Polymilchsäure mit dem folgenden Eigenschaftsprofil wird bevorzugt eingesetzt:
- einer Schmelzvolumenrate (MVR) nach EN ISO 1133 (190° C, 2,16 kg Gewicht) von 0.5 bis 50 insbesondere 2 bis 40 cm³/10min)
- einem Schmelzpunkt unter 240° C;
- einem Glaspunkt (Tg) größer 55° C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise Ingeo^{®} 8052D, 6201D, 6202D, 6251D, und insbesondere Ingeo^{®} 4020D, 4032D 4043D oder 3251D (Polymilchsäure der Fa. NatureWorks) oder Luminy LX175, Luminy L105 (Polymilchsäure der Fa. Total Corbion)

Unter Polyhydroxyalkanoaten werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle^{®} und von der Fa. Tianan unter dem Namen Enmat^{®} vertrieben. Poly-3-hydroxybutyrate-co-4-hydroxybutyrate sind insbesondere von der Fa. Metabolix bekannt. Sie werden unter dem Handelsnamen Mirel^{®} vertrieben. Poly-3-hydroxybutyrate-co-3-hydroxyhexanoate sind von der Fa. P&G oder Kaneka bekannt. Poly-3-hydroxybutyrate-co-3-hydroxyhexanoate weisen in der Regel einen 3-Hydroxyhexanoatanteil von 1 bis 20 und vorzugsweise von 3 bis 15 mol% bezogen auf das Polyhydroxyalkanoat auf. Die Polyhydroxyalkanoate weisen in der Regel ein Molekulargewicht Mw von 100.000 bis 1.000.000 und vorzugsweise von 300.000 bis 600.000 auf.

Unter Stärke wird auch Amylose verstanden; thermoplastifiziert bedeutet mit Weichmachern wie beispielsweise Glycerin, Sorbit oder Wasser thermoplastifiziert (siehe EP-A 539 541, EP-A 575 349, EP-A 652 910) oder auch oberflächenmodifiziert (siehe EP-A 937120, EP-A 947559, EP-A 965615). Erfindungsgemäße Polymermischungen, die 10 bis 35 Gew.-%, bezogen auf das Gesamtgewicht der Polymermischung, an thermoplastischer oder nicht thermoplastischer Stärke enthalten, weisen sowohl eine gute Abbaubarkeit im Boden als auch gute mechanische Eigenschaften wie insbesondere eine hohe Weiterreißfestigkeit auf. Diese stärkehaltigen Mischungen sind daher eine interessante Alternative zu den obengenannten Füllstoff-haltigen (Calcium- und/oder Talk-haltigen) gegebenenfalls auch in Kombination mit den Füllstoff-haltigen Polymermischungen.

Weiterhin können die erfindungsgemäßen Polyester oder Polyestermischungen weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe.

Die Additive werden in Konzentrationen von 0 bis 2 Gew.-%, insbesondere 0,1 bis 2 Gew.-% bezogen auf den erfindungsgemäßen Polyester oder die Polyestermischung eingesetzt. Weichmacher können in 0,1 bis 10 Gew.-% bezogen auf den erfindungsgemäßen Polyester oder die Polyestermischung enthalten sein.

Auch können den Polymermischungen, insbesondere den Polymilchsäurehaltigen Mischungen 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis vi, eines Epoxidgruppen-haltigen Copolymers auf Basis Styrol, Acrylsäureester und/oder Methacrylsäureester zugesetzt werden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Besonders geeignet ist Joncryl^{®} ADR 4468. Komponente v wird insbesondere in PLA haltigen Polyestermischungen eingesetzt.

Die erfindungsgemäßen Polyester und Polyestermischungen können bevorzugt die folgenden Füllstoffe enthalten.

Calciumcarbonat kann beispielsweise in 10 bis 25 Gew.-%, bevorzugt 10 bis 20 Gew.-%, besonders bevorzugt 12 bis 18 Gew.-%, bezogen auf das Gesamtgewicht der Polymermischung, eingesetzt werden. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2,5 Mikrometern auf.

Talk kann beispielsweise in 3 bis 40 Gew.-%, bevorzugt 5 bis 30 Gew.-%, besonders bevorzugt 15 bis 30 Gew.-%, bezogen auf das Gesamtgewicht der Polymermischung, eingesetzt werden. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Neben den Füllstoffen Calciumcarbonat und Talk können noch weitere Mineralien enthalten sein wie: Graphit, Gips, Ruß, Eisenoxid, Calciumchlorid, Kaolin, Siliziumdioxid (Quarz), Natriumcarbonat, Titandioxid, Silikat, Wollastonit, Glimmer, Montmorellonite, Mineralfasern wie Glasfasern und Naturfasern.

Naturfasern sind in der Regel Cellulosefasern, Kenaffasern, Hanffasern, Holzmehl oder Kartoffelschalen. Sie werden vorzugsweise in 1 bis 20 Gew.-% bezogen auf die Polymermischung eingesetzt.

Die Minerialien inklusive der Füllstoffe Calciumcarbonat und Talk können auch als Nanofüllstoffe eingesetzt werden. Nanofüllstoffe sind insbesondere feinteilige Schichtsilikate, bevorzugt Tonmineralien, besonders bevorzugt Montmorillonit enthaltend Tonmineralien, deren Oberfläche mit einem oder mehreren quarternären Ammoniumsalzen und/oder Phosphoniumsalzen und/oder Sulfoniumsalzen modifiziert sind. Als Tonmineralien bevorzugt sind natürliche Montmorillonite und Bentonite.

Insgesamt können den Polyestermischungen beispielsweise Füllstoffe in 5 bis 35 Gew.-%, bezogen auf das Gesamtgewicht der Polymermischung, zugesetzt werden.

Die mit dem erfindungsgemäßen Verfahren zugänglichen THF-armen (Co)Polyester wie beispielsweise PBS kommen alleine oder in Polymermischungen für zahlreiche Anwendungen wie Spritzguss-Produkte, Thermoform-Produkte, Filme oder Schäume in Frage. Dabei werden die (Co)Polyester häufig in Mischungen mit weiteren Biopolymeren wie Polymilchsäure, Polyhydroxyalkanoaten, biologisch-abbaubare aliphatisch-aromatischen Polyestern, Stärke, Thermoplastifizierte Stärke, mineralischen Füllstoffen oder anderen Additiven wie beispielsweise Gleitmittel, Nukeierungsmitteln, Weichmachern oder Pigmenten eingesetzt.

Vorzugsweise wird bei der Herstellung der in den folgenden Schriften beschriebenen Polymermischungen das erfindungsgemäße Verfahren genutzt: WO 2005/017034, WO 2006/074815, WO 2010/034685, WO 2010/034710, WO 2010/034711, WO 2010/034712, WO 2011/045293, WO 2011/054786, WO 2011/086030, WO 2012/055796, WO 2012/113744, WO 2012/152820, WO 2013/000847, WO 2013/000892, WO 2013/017431, WO 2014/075997, WO 2014/075998, WO 2015/169659, WO 2015/169660, WO 2018/114215, PCT/EP2018/058735, PCT/EP2018/071601, PCT/EP2018/071607.

Die bevorzugten aliphatischen und aliphatisch-aromatischen (Co)-Polyester und die diese enthaltenden Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die EU Verordnung 10/2011 legt Grenzwerte für Kunststoffmaterialien fest, die mit Nahrungsmitteln in Berührung stehen. Verpackungsmaterialien aus nicht aufgereinigten aliphatischen Polyestern wie Polybutylensuccinat (PBS) erfüllen die Auflagen dieser Norm nicht und kommen für Lebensmittelanwendungen daher nicht in Frage. Insbesondere die cyclischen Verunreinigungen im Polyester wie THF, cyclische Monomere, Dimere, Trimere und Tetramere können unter den verschiedenen Testbedingungen aus dem Verpackungsmaterial migrieren. Das erfindungsgemäße Verfahren liefert nunmehr aliphatische Polyester, die an cyclischen Verunreinigungen deutlich abgereichert sind und die in der EU Verordnung 10/2011 erforderlichen Grenzwerte erreichen. Dabei hat sich das erfindungsgemäße Verfahren als effizienter als die in EP-A 228399 und EP-A 2623540 beschriebenen Verfahren erwiesen.

Im Folgenden wird das erfindungsgemäße Verfahren näher beschrieben.

Die (Co)Polyester werden wie in der Literatur oder eingangs beschrieben hergestellt.

Eingangs wird das Verfahren zur Herstellung eines (Co)Polyesters wobei der (Co)Polyester zumindest teilweise aus 1,4-Butylenedicarboxylat-Einheiten besteht, in einer Entgasungsanlage beschrieben, dadurch gekennzeichnet, dass der Roh-(Co)Polyester in Gegenwart von 0,1 bis 5 Gew.-%, bezogen auf das Gesamtgewicht der Einsatzstoffe, eines Schleppmittels, vorzugsweise kontinuierlich bei einer mittleren Verweilzeit von 0,1 bis 2 Minuten, und bei einem Druck zwischen 5 bis 300 mbar entgast wird.

Eine bevorzugte Ausführungsform betrifft ein Verfahren zur Herstellung einer Polymermischung enthaltend einen oder mehrere (Co)Polyester, die zumindest zumindest teilweise aus 1,4-Butylenedicarboxylat-Einheiten aufgebaut sind, in einer Entgasungsanlage, die gleichzeitig als Mischungsaggregat fungiert, dadurch gekennzeichnet, dass der Roh-(Co)Polyester mit ggf. weiteren Polymeren und Hilfsstoffen in Gegenwart von 0,1 bis 5 Gew.-%, bezogen auf das Gesamtgewicht der Polymermischung, eines Schleppmittels wie vorzugsweise Wasser vorzugsweise kontinuierlich bei einer mittleren Verweilzeit von 0,1 bis 2 Minuten und bei einem Druck zwischen 0,1 bis 300 mbar - vozugsweise zwischen 5 bis 100 mbar gemischt und entgast wird.

Die Mischung und Entgasung wird vorzugsweise kontinuierlich in einen Extruder, einem kontinuierlichen Kneter (List-Reaktor) oder einem statischen Mischer durchgeführt. Beispielhaft seien folgende Einbauten genannt: Beim statischen Mischer können SMR, SMX, SMXL-Elemente oder Kombinationen daraus z.B. von Fa. Sulzer Chemtech AG, Schweiz eingesetzt werden. Beispiele für einen List-Reaktor sind je nach Anwendungsfeld: ein einwelliger DISCOTHERM B oder zweiwellige CRP- und ORP-Reaktoren. Als Extruder kommen Ein- oder Zweiwellenextruder in Frage.

Die Mischung und Entgasung kann jedoch auch semi-kontinuierlich - beispielsweise in einer Rührkesselekaskade - oder als diskontinuierlich als Batch-Verfahren - beispielsweise in einem Rührkessel - durchgeführt werden.

Die Entgasung wird durch Zugabe eines Schleppmittels effizienter. Hierbei wird ein Vakuum zwischen 5 und 300 mbar, vorzugsweise 5 bis 100 mbar und insbesondere bevorzugt von 10 bis 60 mbar eingestellt. Die Temperaturen in der Entgasungsanlage liegen in der Regel bei 180 bis 280° C und vorzugsweise 200 bis 250° C.

Als Schleppmittel können insbesondere Alkohole wie vorzugsweise Methanol oder Ethanol gegebenfalls auch als wässrige Alkohollösungen, n-Hexan, Cyclohexan oder Aceton eingesetzt werden. Besonders bevorzugt wird als Schleppmittel Wasser oder Wasserdampf eingesetzt.

Das Schleppmittel wird vorzugsweise in den Gasraum der Entgasungsanlage eingespeist. Das hat den Vorteil, dass es zur Ausbildung eines homogenen (Co)Polyesterfilms in der Entgasungsanlage kommt und beispielsweise Blasenbildung oder Schaumbildung im (Co)Polyesterfilm vermieden werden. Auch kann es von Vorteil sein dem Schleppmittel ein vorzugsweise intertes Trägergas wie Stickstoff, Kohlendioxid oder Luft beizumischen.

Die Menge des Schleppmittes beträgt in der Regel zwischen 0,1 und 5 Gew-%, vorzugsweise 0,3 bis 2 Gew.-%, bezogen auf den Roh-(Co)Polyester. Höhere Mengen an Schleppmittel können zu einem nennenswerten Abbau des (Co)polyesters in der Entgasungsanlage führen. Bei einer geringeren Schleppmitelkonzentration kann die Abreicherung des Roh-Polyesters an cyclischen Verunreinigungen wie THF als zu gering ausfallen.

Bei der Verwendung von Polymermischungen im erfindungsgemäßen Verfahren beträgt die Menge des Schleppmittels in der Regel zwischen 0,1 und 5 Gew.-%, vorzugsweise 0,3 bis 3 Gew.-%, bezogen auf das Gesamtgewicht der Polymermischung.

In der diskontinuierlichen Entgasungsanlage wird in der Regel eine Reaktionszeit von unter 30 Minuten eingestellt und im kontinuerlichen Verfahren wie beispielsweise im Extruder eine mittlere Verweilzeit von 0,1 bis 2 Minuten eingestellt. Längere Verweilzeiten würden zum verstärkten Abbau des polykondensierten Polyesters führen, bei kürzeren Verweilzeiten ist die Abreicherung der Verunreinigungen wie THF nicht ausreichend genug. Die mittlere Verweilzeit kann durch das Volumen der Schmelze im Reaktor zum austretenden Volumenstrom bestimmt werden.

Auch kann es von Vorteil sein, den Reaktionskatalysator durch Zugabe einmaliger oder weiterer Mengen der zuvor beschriebenen Deaktivatoren wie beispielsweise phosphorige Säure in seiner Aktivität zu reduzieren.

Als Entgasungsanlage kommen neben dem bevorzugten Doppelschneckenextruder auch ein Einschneckenextruder, Kneter (z.B. Buss-Kneter), Planetwalzenextruder in Frage.

Im erfindungsgemäßen Verfahren lassen sich die Verunreinigungen deutlich abreichern. In der Regel läßt sich bei 1,4-Butandiol-haltigen Polyestern der Rest THF-Gehalt des aliphatischen Polyesters auf die Hälfte oder vorzugsweise auf ein Viertel und insbesondere bevorzugt auf ein Zehntel des ursprünglichen THF-Gehalts reduzieren. In der Regel weist der gereinigte aliphatische Polyester einen Rest-THF-Gehalt von kleiner 30 ppm, vorzugsweise kleiner 10 und insbesondere bevorzugt kleiner 1 ppm auf.

Mit dem erfindungsgemäßen Verfahren lassen sich prozessfähig und effizient (Co)Polyester Polymermischungen herstellen, die arm an Verunreinigungen wie Tetrahydrofuran sind.

Messmethoden:
Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190° C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

Anwendungstechnische Messungen:
Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards. Die Auswertung musste nach 18,83 mL (ca. M= 300 g/mol) abgebrochen werden, da für kleinere Molmassen das Chromatogramm durch Verunreinigungen der Probe, bzw. des SEC-Elutionsmittels, gestört wird.

Die Schmelzvolumenrate MVR wurde bei 190° C und 2.16 kg nach ISO 1133-1 DE gemessen.

Die Oligomere wurden mittels Gaschromatographie gekoppelt mit Massenspektroskopie (GC-MS) charakterisiert. 24.41mg Probe wurde in 1.2ml Dichlormethan gelöst. Die Ampulle wurde 30 Minuten auf den Rollenmischer gelegt. Die Ionisation erfolgte durch positive Ionen, chemische Ionisation und Elektronenstoßionisation. Die Auflösung erfolgt über Einzelauflösung.

### Einsatzstoffe:

Polyester i-1: GS-PLA^{®} FZ91PD, Polybutylensuccinat der Mitsubishi Chemical Coorp. mit einem MVR von 4 cm³/10 min
Polyester i-2: BioPBS FZ71PM, Polybutylensuccinat der Mitsubishi Chemical Coorp. mit einem MVR von 17 cm³/10 min
Co-Polyester ii-1: Polybutylensebacat-co-Terephthalat der BASF mit einem MVR von 1 cm³/10 min
Co-Polyester ii-2: Polybutylensebacat-co-Terephthalat der BASF mit einem MVR von 9 cm³/10 min
Polymer iii-1: ingeo^{®} 4044D, Polymilchsäure der NatureWorks mit einem MVR von 3 cm³/10 min
Polymer iii-2: ingeo^{®} 3251D, Polymilchsäure der NatureWorks mit einem MVR von 30 cm³/10 min
Füllstoff iv-1: Microtalc IT Extra der Fa. Mondo Minerals
Gleitmittel v-1: Erucasäureamid
Schleppmittel x: Wasser
Durchführung der Entgasung

Die Versuche wurden auf einem Doppelschneckenextruder mit Durchmesser 40 mm und einer Länge von 44D durchgeführt. Die mittlere Verweilzeit der Schmelze betrug 15 Sekunden bis 1 Minute. Die Temperaturen am Austritt wurden auf 245° C eingestellt. Das Wasser wurde in den Gasraum des Extruders eingespeist. Die weiteren Parameter sind der Tabelle 1 zu entnehmen.

**Tabelle 1**

| Einsatzst. | Einheit | **V-1** | **V-2** | **E3** | **V-4** | **V-5** | **V-6** | **E7** |
|---|---|---|---|---|---|---|---|---|
| i-1 | Gew.-% | 45,0 | 45,0 | 44,8 | | | | |
| i-2 | Gew.-% | | | | 54,8 | 54,8 | 54,5 | 54,2 |
| ii-1 | Gew.-% | 10,0 | 10,0 | 9,9 | | | | |
| ii-2 | Gew.-% | | | | 4,7 | 4,7 | 4,7 | 4,7 |
| iii-1 | Gew.-% | 15,0 | 15,0 | 14,9 | | | | |
| iii-2 | Gew.-% | | | | 20,0 | 20,0 | 19,9 | 19,8 |
| iv-1 | Gew.-% | 30,0 | 30,0 | 29,9 | 20,2 | 20,2 | 20,1 | 20,0 |
| v-1 | Gew.-% | | | | 0,3 | 0,3 | 0,3 | 0,3 |
| x | Gew.-% | | | 0,5 | | | 0,5 | 1 |
| | | | | | | | | |
| Druck | mbar | 600 | 50 | 50 | 300 | 30 | 30 | 30 |
| THF-Gehalt | ppm | 40 | 20 | 10 | 3 | 1,5 | 1 | < 1 |

## Patentansprüche

1. Verfahren zur Herstellung eines (Co)Polyesters, wobei der (Co)Polyester zumindest teilweise aus 1,4-Butylenedicarboxylat-Einheiten besteht, in einer Entgasungsanlage, **dadurch gekennzeichnet, dass** der Roh-(Co)Polyester in Gegenwart von 0,1 bis 5 Gew.-%, bezogen auf das Gesamtgewicht der Einsatzstoffe, eines Schleppmittels bei einem Druck zwischen 5 bis 300 mbar entgast wird.

2. Verfahren zur Herstellung einer Polymermischung enthaltend einen oder mehrere (Co)Polyester, die zumindest zumindest teilweise aus 1,4-Butylenedicarboxylat-Einheiten aufgebaut sind, in einer Entgasungsanlage, die gleichzeitig als Mischungsaggregat fungiert, **dadurch gekennzeichnet, dass** der Roh-(Co)Polyester mit ggf. weiteren Polymeren und Hilfsstoffen in Gegenwart von 0,1 bis 5 Gew.-%, bezogen auf das Gesamtgewicht der Polymermischung, eines Schleppmittels einem Druck zwischen 0,1 bis 300 mbar gemischt und entgast wird.

3. Verfahren nach Anspruch 1 oder 2, **dadurch gekennzeichnet, dass** das Schleppmittel Wasser ist.

4. Verfahren nach Anspruch 1 bis 3, **dadurch gekennzeichnet, dass** das Schleppmittel in den Gasraum der Entgasungsanlage eingespeist wird.

5. Verfahren nach Anspruch 1 bis 4, **dadurch gekennzeichnet, dass** die Entgasungsanlage ein Extruder ist und bei einer mittleren Verweilzeit von 0,1 bis 2 Minuten entgast wird.

6. Verfahren nach einem der Ansprüche 1 bis 5, **dadurch gekennzeichnet, dass** die Entgasungsanlage eine Innentemperatur von 200° C bis 250° C aufweist.

7. Verfahren nach einem Anspruch 1, **dadurch gekennzeichnet, dass** in Gegenwart von 0,3 bis 2 Gew.-%, bezogen auf das Gesamtgewicht des Roh-(Co)Polyesters, des Schleppmittels Wasser entgast wird.

8. Verfahren nach Anspruch 2, **dadurch gekennzeichnet, dass** in Gegenwart von 0,3 bis 3 Gew.-%, bezogen auf das Gesamtgewicht der Polymermischung, des Schleppmittels Wasser entgast wird.

9. Verfahren nach einem der Ansprüche 1 bis 8, **dadurch gekennzeichnet, dass** der (Co)Polyester ein Polybutylensuccinat, Polybutylensuccinat-coadipat, Polybutylensuccinat-cosebacat, Polybutylenadipat-coterephthalat und/oder Polybutylensebacatcoterephthalat ist.

10. Verfahren nach einem der Ansprüche 1 bis 9, **dadurch gekennzeichnet, dass** bei einem Druck zwischen 5 und 100 mbar entgast wird.

11. Verfahren nach Anspruch 2 oder 8, **dadurch gekennzeichnet, dass** die hergestellte Polymermischung einen THF-Restgehalt von kleiner 10 ppm, vorzugsweise kleiner 1 ppm aufweist.

## Claims

1. A process for producing a (co)polyester, where the (co)polyester at least partially consists of 1,4-butylene dicarboxylate units, in a degassing plant, wherein the crude (co)polyester is degassed in the presence of 0.1% to 5% by weight, based on the total weight of the input materials, of an entraining agent at a pressure between 5 to 300 mbar.

2. A process for producing a polymer mixture comprising one or more (co)polyesters at least partially constructed from 1,4-butylene dicarboxylate units in a degassing plant which simultaneously functions as a mixing unit, wherein the crude (co)polyester is mixed and degassed optionally with further polymers and auxiliaries in the presence of 0.1% to 5% by weight, based on the total weight of the polymer mixture, of an entraining agent at a pressure between 0.1 to 300 mbar.

3. The process according to claim 1 or 2, wherein the entraining agent is water.

4. The process according to claims 1 to 3, wherein the entraining agent is introduced into the gas space of the degassing plant.

5. The process according to claims 1 to 4, wherein the degassing plant is an extruder and degassing is performed with an average residence time of 0.1 to 2 minutes.

6. The process according to any of claims 1 to 5, wherein the degassing plant has an internal temperature of 200°C to 250°C.

7. The process according to claim 1, wherein degassing is performed in the presence of 0.3% to 2% by weight, based on the total weight of the crude (co)polyester, of the entraining agent water.

8. The process according to claim 2, wherein degassing is performed in the presence of 0.3% to 3% by weight, based on the total weight of the polymer mixture, of the entraining agent water.

9. The process according to any of claims 1 to 8, wherein the (co)polyester is a polybutylene succinate, polybutylene succinate-co-adipate, polybutylene succinate-co-sebacate, polybutylene adipate-co-terephthalate and/or polybutylene sebacate-co-terephthalate.

10. The process according to any of claims 1 to 9, wherein degassing is performed at a pressure between 5 and 100 mbar.

11. The process according to claim 2 or 8, wherein the produced polymer mixture has a residual THF content of less than 10 ppm, preferably less than 1 ppm.

## Revendications

1. Procédé de fabrication d'un (co)polyester, le (co)polyester étant au moins partiellement constitué de motifs 1,4-butylènedicarboxylate, dans une installation de dégazage, **caractérisé en ce que** le (co)polyester brut est dégazé en présence de 0,1 à 5 % en poids, par rapport au poids total des substances de départ, d'un agent d'entraînement sous une pression entre 5 et 300 mbar.

2. Procédé de fabrication d'un mélange de polymères contenant un ou plusieurs (co)polyesters, qui au moins partiellement sont constitués de motifs 1,4-butylènedicarboxylate, dans une installation de dégazage qui agit simultanément comme équipement mélangeur, **caractérisé en ce que** le (co)polyester brut est mélangé avec éventuellement d'autres polymères et adjuvants en présence de 0,1 à 5 % en poids, par rapport au poids total du mélange de polymères, d'un agent d'entraînement sous une pression entre 0,1 et 300 mbar, et est dégazé.

3. Procédé selon la revendication 1 ou 2, **caractérisé en ce que** l'agent d'entraînement est l'eau.

4. Procédé selon l'une quelconque des revendications 1 à 3, **caractérisé en ce que** l'agent d'entraînement est injecté dans l'espace gazeux de l'installation de dégazage.

5. Procédé selon l'une quelconque des revendications 1 à 4, **caractérisé en ce que** l'installation de dégazage est une extrudeuse et est dégazée pour un temps de séjour moyen de 0,1 à 2 minutes.

6. Procédé selon l'une quelconque des revendications 1 à 5, **caractérisé en ce que** l'installation de dégazage présente une température interne de 200 °C à 250 °C.

7. Procédé selon la revendication 1, **caractérisé en ce qu'**on dégaze de l'eau en présence de 0,3 à 2 % en poids, par rapport au poids total du (co)polyester brut, de l'agent d'entraînement.

8. Procédé selon la revendication 2, **caractérisé en ce qu'**on dégaze de l'eau en présence de 0,3 à 3 % en poids, par rapport au poids total du mélange de polymères, de l'agent d'entraînement.

9. Procédé selon l'une quelconque des revendications 1 à 8, **caractérisé en ce que** le (co)polyester est un poly(succinate de butylène), un poly(succinate-co-adipate de butylène), un poly(succinate-co-sébaçate de butylène), un poly(adipate-co-téréphtalate de butylène) et/ou un poly(sébaçate-co-téréphtalate de butylène).

10. Procédé selon l'une quelconque des revendications 1 à 9, **caractérisé en ce qu'**on procède au dégazage sous une pression entre 5 et 100 mbar.

11. Procédé selon la revendication 2 ou 8, **caractérisé en ce que** le mélange de polymères fabriqué présente une teneur résiduelle en THF inférieure à 10 ppm, de préférence inférieure à 1 ppm.
